(19) Europäisches Patentamt
European Patent Office
Office européen des brevets

(11) **EP 2 131 055 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**23.09.2020 Patentblatt 2020/39**

(45) Hinweis auf die Patenterteilung:
**16.01.2013 Patentblatt 2013/03**

(21) Anmeldenummer: **09155959.1**

(22) Anmeldetag: **24.03.2009**

(51) Int Cl.:
***F16D 23/06*** (2006.01)

(54) **Rastanordnung für eine Getriebe-Schaltkupplung**

Ratchet assembly for a gearbox clutch

Agencement d'encliquetage pour un embrayage de boîte de vitesse

(84) Benannte Vertragsstaaten:
**DE FR IT**

(30) Priorität: **05.06.2008 DE 102008027775**

(43) Veröffentlichungstag der Anmeldung:
**09.12.2009 Patentblatt 2009/50**

(73) Patentinhaber: **Magna PT B.V. & Co. KG**
**74199 Untergruppenbach (DE)**

(72) Erfinder:
• **Bünder, Carsten**
**74189 Weinsberg-Grantschen (DE)**
• **Hink, Alexander**
**74223 Flein (DE)**
• **Kirchner, Markus**
**71732 Tamm (DE)**
• **Sojka, Jürgen**
**74523 Schwäbisch Hall (DE)**
• **Thullner, Frank**
**74199 Untergruppenbach (DE)**

(74) Vertreter: **Witte, Weller & Partner Patentanwälte mbB**
**Postfach 10 54 62**
**70047 Stuttgart (DE)**

(56) Entgegenhaltungen:
| | |
|---|---|
| EP-A1- 1 126 198 | WO-A1-2004/029486 |
| DE-A1- 10 133 695 | DE-A1- 19 932 300 |
| DE-A1-102005 028 803 | DE-B3-102005 053 555 |
| DE-C1- 4 404 093 | FR-A1- 2 886 999 |
| JP-A- 2000 130 463 | JP-A- 2005 201 415 |

EP 2 131 055 B2

**Beschreibung**

Die vorliegende Erfindung betrifft eine Rastanordnung für eine Getriebe-Schaltkupplung, mit einem ersten Glied wie einer Führungsmuffe und einem zweiten Glied wie einer Schaltmuffe, die in einer ersten Richtung gegeneinander bewegbar sind, wobei an dem ersten Glied ein Rastelement wie eine Kugel gelagert ist, das elastisch mittels einer Feder gegen das zweite Glied angedrückt ist, wobei an dem zweiten Glied eine Rastkontur ausgebildet ist, die eine Vertiefung aufweist, in die das Rastelement in einer Raststellung der zwei Glieder eingreift, und wobei das zweite Glied in der ersten Richtung aus der Raststellung in eine zweite Stellung bewegbar ist, währenddessen das Rastelement aus der Vertiefung herausgedrückt wird.

Derartige Rastanordnungen für Getriebe-Schaltkupplungen sind allgemein bekannt und finden insbesondere in Stirnradgetrieben Anwendung. Hierbei ist den Gangstufen des Getriebes jeweils ein Radsatz zugeordnet. Jeder Radsatz weist ein an einer Welle drehbar gelagertes Losrad auf. Mittels einer Schaltkupplung ist das Losrad mit der Welle verbindbar. Die Schaltkupplung kann eine Klauenkupplung sein, kann jedoch insbesondere eine Synchron-Schaltkupplung sein, die das Herstellen eines Formschlusses zwischen dem Losrad und der Welle erst dann zulässt, wenn die Relativdrehzahl dieser Bauteile niedrig genug ist.

Derartige Schaltkupplungen weisen eine Schaltmuffe mit einer Innenverzahnung auf, die mit der Außenverzahnung einer Führungsmuffe (auch Synchronkörper genannt) in Eingriff steht. Die Führungsmuffe ist mit der Welle starr verbunden. An dem Losrad ist ein sog. Kupplungskörper festgelegt, der ebenfalls eine Außenverzahnung aufweist. Durch Verschieben der Schaltmuffe in Bezug auf die Führungsmuffe kann die Innenverzahnung der Schaltmuffe auch mit dem Kupplungskörper in Eingriff treten, um die Schaltkupplung zu schließen. Zum Öffnen der Schaltkupplung wird die Schaltmuffe wieder in axialer Richtung zurückbewegt, bis in eine Neutralstellung hinein. In der Neutralstellung wird die Schaltmuffe an der Führungsmuffe mittels einer Rastanordnung gehalten, wie sie oben beschrieben ist.

Derartige Stirnradgetriebe, wie z.B. bekannt aus DE 102005028803A1, werden seit einigen Jahren auch in automatisierter Form hergestellt. Dabei unterscheidet man im Wesentlichen zwischen sog. automatisierten Schaltgetrieben (ASG) und sog. Doppelkupplungsgetrieben.

Bei einem Doppelkupplungsgetriebe weist das Getriebe zwei Teilgetriebe auf, von denen eines den ungeraden und das andere den geraden Gangstufen zugeordnet ist. Jedem Teilgetriebe ist eine eigene Eingangskupplung zugeordnet, die das jeweilige Teilgetriebe mit einem Antriebsmotor verbindet. Derartige Doppelkupplungsgetriebe erlauben Schaltvorgänge unter Last, wobei eine Reibkupplung eines aktiven Teilgetriebes geöffnet und in überschneidender Weise eine Reibkupplung des bislang inaktiven Teilgetriebes geschlossen wird, so dass das inaktive Teilgetriebe zum aktiven Teilgetriebe wird und umgekehrt.

Automatisierte Stirnradgetriebe wie ASG und Doppelkupplungsgetriebe werden von Aktuatoren betätigt (bspw. elektromotorischen, elektromagnetischen oder fluidischen Aktuatoren), die mit sehr viel höheren Schaltgeschwindigkeiten arbeiten als sie gewöhnlich von Fahrern manueller Schaltgetriebe realisiert werden. Dies kann zu einer erhöhten Geräuschentwicklung in der Schaltkupplung führen. Bei Doppelkupplungsgetrieben ist es ferner so, dass in dem jeweils inaktiven Teilgetriebe vorbereitende Schaltvorgänge durchgeführt werden. Beispielsweise wird bei einer Fahrt im 2. Gang in dem anderen Teilgetriebe vorbereitend der 3. Gang eingelegt. Falls dann in dem 2. Gang geblieben wird und das Fahrzeug aufgrund eines Fahrerwunsches in den Schubbetrieb übergeht, wird ggf. in dem inaktiven Teilgetriebe vorbereitend von dem 3. Gang in den 1. Gang geschaltet. Mit anderen Worten können bei Doppelkupplungsgetrieben Schaltvorgänge im Getriebe stattfinden, die nicht synchron zu tatsächlichen Gangwechseln (Wechsel des aktiven Teilgetriebes) stattfinden. Derartige asynchrone Schaltvorgänge können, sofern sie hörbar sind, von dem Fahrer des Kraftfahrzeuges als störend empfunden werden.

Demzufolge ist es die Aufgabe der vorliegenden Erfindung, eine verbesserte Rastanordnung für Getriebe-Schaltkupplungen anzugeben, die insbesondere hinsichtlich der Schaltgeräusche optimiert ist.

Diese Aufgabe wird durch eine Rastanordnung mit den Merkmalen des Anspruchs 1 oder des Anspruchs 9 gelöst.

Es hat sich gezeigt, dass ein Schaltklacken insbesondere in automatisierten Stirnradgetrieben auftreten kann, wenn die zwei Glieder mit einer relativ hohen Relativgeschwindigkeit gegeneinander bewegt werden. Abhängig von der Feder (insbesondere Federrate) und von der Gestaltung der Rastkontur kann es dabei vorkommen, dass die Kugel beim Überfahren einer Rampe von der Rastkontur abhebt, und zwar gegen die Kraft der Feder. Nachfolgend wird die Kugel aufgrund der Kraft der Feder wieder gegen die Rastkontur angedrückt, was zu dem erwähnten Schaltklacken führen kann.

Dies kann sowohl bei einer Relativbewegung von der Raststellung in die weitere Stellung (z.B. Schaltstellung) als auch in umgekehrter Richtung erfolgen.

Die erfindungsgemäße Rastanordnung ist nun so abgestimmt, und zwar hinsichtlich der Parameter Relativgeschwindigkeit der zwei Glieder, Federeigenschaften (insbesondere Federrate) und Form der Rastkontur, so dass ein Abheben des Rastelementes (der Kugel) von der Rastkontur vermieden wird. Hierdurch kann das Schaltklacken verhindert werden.

Die Verwendung einer solchen Rastanordnung ist insbesondere in Doppelkupplungsgetrieben vorteilhaft, da in solchen Getrieben ein Schaltklacken als störend empfunden werden kann. In anderen Getrieben, wie manuellen Schaltgetrieben oder automatisierten Schaltgetrieben (ASG) wird ein solches Schaltklacken hingegen häufig nicht als störend empfunden, sondern als eine ggf. nicht unerwünschte Rückmeldung für den Fahrer, dass ein Schaltvorgang stattgefunden hat. Nichtsdestotrotz kann die erfindungsgemäße Rastanordnung zur Verbesserung der Geräuschentwicklung beim Schalten auch in solchen Getrieben Anwendung finden.

Die erfindungsgemäße Rastanordnung wird vorzugsweise in Schaltkupplungen von Stirnradgetrieben verwendet, kann jedoch auch in anderen Anwendungen implementiert werden, sofern die Geräuschentwicklung beim Ent- bzw. Einrasten von Bedeutung ist. In Getriebe-Schaltkupplungen ist die erfindungsgemäße Rastanordnung sowohl bei Klauenkupplungen verwendbar. Sie ist jedoch auch bei Synchron-Schaltkupplungen verwendbar, die einen Synchronring aufweisen, der gegenüber der Schaltmuffe begrenzt verdrehbar ist. In solchen Synchron-Schaltkupplungen ist die Feder häufig in einem Stein gelagert, der axial begrenzt beweglich an der Führungsmuffe gelagert ist und mit dem Synchronring in Eingriff treten kann. Hierbei dient die Rastanordnung auch zur Erzeugung einer sog. Vorsynchronkraft. Wenn nämlich die Schaltmuffe in axialer Richtung bewegt wird, wird über die Kugel zunächst der Stein mitgenommen und drückt gegen den Synchronring. Sofern die relative Drehzahl zwischen Synchronring und Kupplungskörper hoch ist, schlägt der Synchronring um, so dass die Synchron-Schaltkupplung sperrt. Erst wenn die Relativgeschwindigkeit zwischen Synchronring und Kupplungskörper verringert ist, lässt sich der Synchronring zurückdrehen. Ab diesem Zeitpunkt kann die Schaltmuffe in axialer Richtung weiterbewegt werden, wobei die Rastanordnung gelöst wird, das Rastelement folglich aus der Vertiefung der Rastkontur herausgedrückt wird.

Die auf das Rastelement wirkende Feder hat folglich auch einen Einfluss auf die erzielbare Vorsynchronkraft. Durch die erfindungsgemäße Rastanordnung kann die Federrate der Feder in idealer Weise auf eine geforderte Vorsynchronkraft abgestellt werden. Durch geeignete Ausbildung der Rastkontur kann dennoch verhindert werden, dass die Kugel bei dem anschließenden Durchschalten von der Rastkontur abhebt. Insbesondere ist es hierbei bspw. möglich, relativ weiche Federn zu verwenden, bei denen die Gefahr des Abhebens des Rastelementes von der Rastkontur im Stand der Technik höher ist, insbesondere bei den relativ hohen Schaltgeschwindigkeiten, die in automatisierten Stirnradgetrieben erzielt werden.

Das Rastelement ist vorzugsweise eine Kugel, kann jedoch eine andere Form haben. Bevorzugt ist das Rastelement ein Wälzkörper, wie eine Kugel, ein Zylinder oder Ähnliches.

Die Aufgabe wird somit vollkommen gelöst.

Gemäß der Erfindung ist die Rastkontur eine Sitzkontur, eine Geradkontur und eine zwischen der Sitzkontur und der Geradkontur angeordnete Übergangskontur aufweist.

Hierbei liegt das Rastelement in dem eingerasteten Zustand in der Sitzkontur, die in der Regel den tiefsten Punkt der Vertiefung bildet. Die Geradkontur ist eine Kontur, die bevorzugt etwa parallel zu der ersten Richtung (der Bewegungsrichtung) verläuft. Die Übergangskontur kann dabei in Bezug auf die Geradkontur einen Winkel einnehmen, der größer ist als 0°. Der Winkel der Übergangskontur kann dabei ebenfalls einen Einfluss nehmen auf die erzielbare Vorsynchronkraft. Je größer der Winkel ist, desto höher ist auch in der Regel die erzielbare Vorsynchronkraft. Mit der erfindungsgemäßen Rastanordnung kann die Übergangskontur einen Abschnitt mit relativ großem Winkel in Bezug auf die Geradkontur aufweisen, so dass trotz der Verwendung einer relativ weichen Feder eine relativ hohe Vorsynchronkraft in einer Synchron-Schaltkupplung erzielbar ist.

Gemäß einer weiteren bevorzugten Ausführungsform erfüllt die maximale Steigung $y'_{max}$ der Rastkontur die folgende Bedingung:

$$y'_{max} = \partial t \cdot (-g + (2F_0 - K \cdot \partial y) / 2 \cdot m) / v_{max},$$

wobei $\partial t$ die Schaltzeit ist, wobei $g$ die Erdbeschleunigung ist, wobei $F_0$ die Vorspannkraft der Feder ist, wobei $K$ die Federrate ist, wobei $m$ die Masse des Rastelementes ist und wobei $v_{max}$ die maximale Relativgeschwindigkeit der zwei Glieder ist.

Sofern die Rastkontur die obige Bedingung erfüllt, kann vermieden werden, dass das Rastelement bei der Relativbewegung von der Rastkontur abhebt, so dass ein Schaltklacken vermieden werden kann.

Gemäß einer weiteren bevorzugten Ausführungsform ist die Funktion der Rastkontur stetig und differenzierbar.

Bei dieser Ausführungsform wird die Rastkontur als eine Funktion $y = f(x)$ betrachtet, wobei $x$ parallel zu der ersten Richtung (der Axialrichtung) verläuft. Durch die Ausbildung der Rastkontur als stetige und differenzierbare Kontur bzw. Funktion kann erreicht werden, dass die Rastkontur ohne scharfe Kanten realisierbar ist. Hierdurch kann vermieden werden, dass das Rastelement an einer solchen scharfen Kante von der Rastkontur abhebt.

Erfindungsgemaess weist ein Uebergang zwischen der Sitzkontur und der Uebergangskontur einen Radius auf, der im Bereich von 0,3 mm bis 2 mm liegt.

In entsprechender Form ist es bevorzugt, wenn ein Übergang zwischen der Übergangskontur und der Geradkontur einen Radius aufweist, der im Bereich von 0,3 mm bis 2 mm liegt.

Die Übergangskontur ist aus zwei oder mehreren Schrägkonturen (jeweils linearer Form) aufgebaut, wobei es bevorzugt ist, wenn auch der Übergang zwischen diesen Schrägkonturen einen solchen Radius aufweise.

Besonders bevorzugt liegt der Radius dieser Übergänge im Bereich von 0,5 bis 1,8 mm.

Ferner ist es erfindungsgemäß, wenn die Übergangskontur eine erste Schrägkontur aufweist, die benachbart zu der Sitzkontur ist und gegenüber der Geradkontur einen Winkel im Bereich 20° bis 70°, insbesondere im Bereich von 30° bis 50° aufweist.

Die erste Schrägkontur ist als lineare Kontur ausgebildet und weist einen relativ großen Winkel in Bezug auf die Geradkontur auf, so dass eine relativ hohe Vorsynchronkraft (bei Verwendung in einer Synchron-Schaltkupplung) realisierbar ist.

Gemäß einer weiteren bevorzugten Ausführungsform weist die Übergangskontur eine zweite Schrägkontur auf, die benachbart zu der Geradkontur ist und gegenüber der Geradkontur einen Winkel im Bereich von 8° bis 30°, insbesondere im Bereich von 12° bis 18° aufweist.

Dieser zweite Winkel im Bereich von 8° bis 30° ist so gewählt, dass das Rastelement bei dem Übergang von der zweiten Schrägkontur in die Geradkontur keinen großen Winkelsprung überwinden muss. Gerade in diesem Bereich kann die Relativgeschwindigkeit bereits relativ hoch sein, insbesondere beim Entrasten der Rastanordnung. Demzufolge ist ein solch kleiner Winkel besonders vorteilhaft.

Gemäß der Erfindung weist die Übergangskontur eine erste Schrägkontur aufweist, die benachbart zu der Sitzkontur ist, und weist eine zweite Schrägkontur auf, die benachbart zu der Geradkontur ist, wobei der spitze Winkel, den die erste Schrägkontur gegenüber der Geradkontur einnimmt, größer ist als der spitze Winkel, den die zweite Schrägkontur gegenüber der Geradkontur einnimmt.

Hierdurch kann die Übergangskontur funktional so abgestimmt werden, dass die erste Schrägkontur auf eine möglichst hohe Vorsynchronkraft abgestimmt ist, wohingegen die zweite Schrägkontur darauf abgestimmt ist, dass die Relativgeschwindigkeit zwischen dem Rastelement und dem zweiten Glied beim Entrasten bereits relativ hoch ist.

Gemäß einer weiteren bevorzugten Ausführungsform weist die Übergangskontur eine erste Schrägkontur auf, die benachbart zu der Sitzkontur ist, und weist eine zweite Schrägkontur auf, die benachbart zu der Geradkontur ist, wobei die erste und die zweite Schrägkontur in der ersten Richtung etwa gleich lang sind.

Dies ermöglicht insgesamt hohe Relativgeschwindigkeiten der zwei Glieder, ohne dass ein Schaltklacken auftritt.

Eine weitere vorteilhafte Ausführungsform sieht vor, dass die Sitzkontur eine an die Form des Rastelementes angepasste Kontur aufweist.

Sofern das Rastelement bspw. eine Kugel ist, ist die Sitzkontur vorzugsweise mit einem Radius entsprechend dem Radius der Kugel ausgebildet. Hierdurch kann zum einen ein sicherer Sitz in der Vertiefung realisiert werden. Zum anderen können Schaltgeräusche beim Einrasten der Rastanordnung verringert werden, da die Kugel generell mit einer relativ großen Fläche in die Sitzkontur einfällt.

Am Boden der Sitzkontur kann ferner eine kleine Nut vorhanden sein, die dafür sorgt, dass sich das Medium zwischen dem Rastelement und der Sitzkontur beim Einrasten leicht verdrängen lässt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Darstellung eines Doppelkupplungsgetriebes;

Fig. 2    eine schematische Darstellung einer Rastanordnung, insbesondere zur Verwendung in einem Doppelkupplungsgetriebe der in Fig. 1 gezeigten Art.

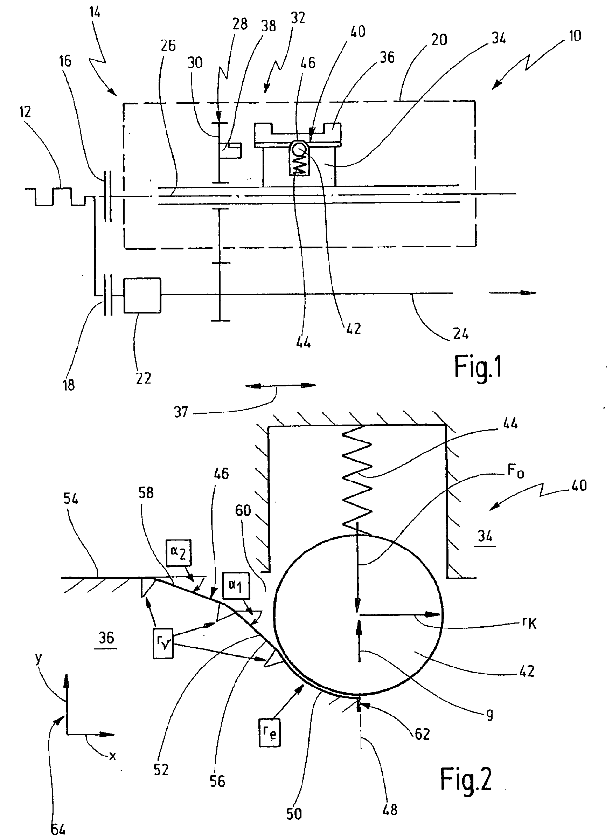

In Fig. 1 ist ein Antriebsstrang eines Kraftfahrzeuges generell mit 10 bezeichnet.

Der Antriebsstrang 10 weist einen Antriebsmotor 12 wie einen Verbrennungsmotor auf. Ferner weist der Antriebsstrang 10 ein Doppelkupplungsgetriebe 14 auf. Das Doppelkupplungsgetriebe 14 weist eine erste Reibkupplung 16 und eine zweite Reibkupplung 18 auf, deren Eingangsglieder mit dem Antriebsmotor 12 verbunden sind. Ein Ausgangsglied der ersten Reibkupplung 16 ist mit einem ersten Teilgetriebe 20 verbunden, dem bspw. die ungeraden Gangstufen zugeordnet sind. Ein Ausgangsglied der zweiten Reibkupplung 18 ist mit einem zweiten Teilgetriebe 22 verbunden, dem bspw. die geraden Gangstufen zugeordnet sind. Die zwei Teilgetriebe 20, 22 weisen eine gemeinsame Getriebeausgangswelle 24 auf, die bspw. mit einer Kardanwelle oder Ähnlichem verbindbar ist.

Die Darstellung des Doppelkupplungsgetriebes 14 ist rein schematischer Natur. Anhand des ersten Teilgetriebes 20 soll ein typischer Aufbau eines solchen Teilgetriebes erläutert werden. Das Teilgetriebe 20 weist eine Getriebeeingangswelle 26 auf, die mit dem Ausgangsglied der ersten Reibkupplung 16 verbunden ist. Ferner weist das erste Teilgetriebe 20 einen Radsatz 28 auf, der ein Losrad 30 beinhaltet, das drehbar an der Getriebeeingangswelle 26 gelagert ist. Eine Schaltkupplung 32 dient dazu, das Losrad 30 entweder drehfest mit der Getriebeeingangswelle 26 zu verbinden oder von dieser zu trennen.

Die Schaltkupplung 32 weist eine Führungsmuffe 34 auf, die drehfest mit der Getriebeeingangswelle 26 verbunden ist. Ferner weist die Schaltkupplung 32 eine Schaltmuffe 36 auf, die entlang einer Schaltrichtung 37 bewegbar ist. Hierzu sind die Schaltmuffe 36 und die Führungsmuffe 34 über eine geeignete Verzahnung miteinander gekoppelt.

An dem Losrad 30 ist ein Kupplungskörper 38 festgelegt. In Fig. 1 ist die Schaltmuffe 36 in einer Neutralstellung gezeigt. Sofern die Schaltmuffe 36 aus dieser Position in Richtung des Kupplungskörpers 38 bewegt wird, tritt deren Innenverzahnung mit einer Außenverzahnung des Kupplungskörpers 38 in Eingriff, um das Losrad 30 drehfest mit der Getriebeeingangswelle 26 zu verbinden.

Die Teilgetriebe 20, 22 weisen in der Regel eine Mehrzahl derartiger Radsätze bzw. Schaltkupplungen auf. Moderne Doppelkupplungsgetriebe haben insgesamt häufig 6, 7 oder sogar noch mehr Gangstufen.

Die Schaltmuffe 36 ist häufig nicht nur einer Schaltkupplung 32 sondern häufig noch einer weiteren Schaltkupplung zugeordnet, und zwar für ein (in Fig. 1 nicht dargestelltes) Losrad auf der dem Losrad 30 gegenüberliegenden Seite der Schaltmuffe 36. Die Schaltmuffe 36 wird in Bezug auf die Führungsmuffe 34 mittels einer Rastanordnung 40 in einer Neutralstellung gehalten. Die Rastanordnung 40 weist eine Kugel 42 auf, die an der Führungsmuffe 34 gelagert ist. Ferner weist die Rastanordnung 40 eine Feder 44 auf, mittels der die Kugel 42 gegen die Schaltmuffe 36 angedrückt wird. Ferner weist die Rastanordnung 40 eine an der Schaltmuffe 36 ausgebildete Rastkontur 46 auf. Die Rastkontur 46 beinhaltet insbesondere eine Vertiefung, in die die Kugel 42 in der gezeigten Neutralposition eingreift.

Die Schaltkupplung 32 ist in schematischer Form als Klauenkupplung dargestellt. Es versteht sich jedoch, dass die Schaltkupplung 32 auch als Synchron-Schaltkupplung ausgebildet sein kann. In diesem Fall kann die Kugel 42 bspw. in einem Stein gelagert sein, der axial beweglich an der Führungsmuffe 34 gelagert ist und mit einem nicht dargestellten Synchronring in Eingriff gebracht werden kann.

Fig. 2 zeigt eine bevorzugte Ausführungsform einer erfindungsgemäßen Rastanordnung 40, wie sie für die Schaltkupplung 32 des Doppelkupplungsgetriebes 14 der Fig. 1 verwendbar ist.

Die Rastkontur 46 ist symmetrisch in Bezug auf eine Symmetrieachse 48, die senkrecht zu der Bewegungsrichtung 37 verläuft. In Fig. 2 ist nur eine Hälfte der Rastkontur 46 dargestellt.

Die Rastkontur 46 weist eine Sitzkontur 50 auf, die im Schnitt teilkreisförmig ausgebildet ist, und zwar mit einem Radius $r_e$, der im Wesentlichen dem Radius $r_k$ der Kugel 42 entspricht.

Ferner weist die Rastkontur 46 eine Übergangskontur 52 auf, die in axialer Richtung 37 zwischen der Sitzkontur 50 und einer Geradkontur 54 liegt.

Die Übergangskontur 52 weist eine erste Schrägkontur 56 auf, die in Bezug auf die Erstreckung der Geradkontur 54 einen Winkel $\alpha_1$ einnimmt. Der Winkel $\alpha_1$ liegt im Bereich von 20° bis 70°, insbesondere im Bereich bis 30° bis 50°.

Zwischen der ersten Schrägkontur 56 und der Geradkontur 54 ist eine zweite Schrägkontur 58 vorgesehen, die in Bezug auf die Geradkontur 54 einen Winkel $\alpha_2$ einnimmt. Der Winkel $\alpha_2$ liegt im Bereich von 8° bis 30°, insbesondere im Bereich von 12° bis 18°.

Die Übergänge zwischen den einzelnen Konturen (Sitzkontur 50, erste Schrägkontur 56, zweite Schrägkontur 58 und Geradkontur 54) sind jeweils abgerundet ausgebildet, und zwar mit Radien $r_v$, die im Bereich von 0,3 bis 2 mm, insbesondere im Bereich von 0,5 bis 1,8 mm liegen.

Die so geformte Rastkontur 46 bildet eine Vertiefung 60, in die die Kugel 42 einrasten kann.

Am Boden der Sitzkontur 50 ist eine Nut 62 ausgebildet, in die ein Medium zwischen der Kugel 42 und der Sitzkontur 50 verdrängt werden kann.

In Fig.2 ist ferner ein Koordinatensystem 64 gezeigt, dessen x-Achse parallel zu der Bewegungsrichtung 37 verläuft. Die y-Achse entspricht der Bewegung der Kugel 42 in Bezug auf die Führungsmuffe 34, wenn die Rastanordnung 40 entrastet oder eingerastet wird.

Die Rastkontur 46 kann als Funktion $y = f(x)$ aufgefasst werden, wobei die maximale Steigung $y'_{max}$ der Rastkontur 46 die folgende Bedingung erfüllt:

$$ y'_{max} = \partial t \cdot (-g + (2F_0 - K \cdot \partial y) / 2 \cdot m) / v_{max}, $$

wobei $\partial t$ die Schaltzeit ist, wobei $g$ die Erdbeschleunigung ist, wobei $F_0$ die Vorspannkraft der Feder 44 ist, wobei $K$ die Federrate ist, wobei $m$ die Masse des Rastelementes 42 ist und wobei $v_{max}$ die maximale Relativgeschwindigkeit der zwei Glieder 34, 36 ist.

Durch diese Ausgestaltung kann erreicht werden, dass die Kugel 42 bei einer vorgegebenen maximalen Relativgeschwindigkeit zwischen den zwei Gliedern 34, 36 nicht von der Rastkontur 46 abhebt, so dass ein Schaltklacken vermieden werden kann.

Ferner ist die Funktion der Rastkontur stetig und differenzierbar, also im Wesentlichen ohne Kanten bzw. Unstetigkeiten ausgebildet was auch dazu beiträgt, dass ein Schaltklacken vermieden werden kann.

Metallische Schaltgeräusche werden folglich minimiert. Dies gilt sowohl für den Vorgang des Entrastens als auch für den Vorgang des Einrastens der Rastanordnung 40.

Die Herstellung der Rastkontur, insbesondere der Übergangskontur aus linearen Abschnitten ermöglicht, die erzielbare Vorsynchronkraft besser und konsistenter bzw. konstanter einstellen zu können. Dies gilt insbesondere für die erste Schrägkontur 56. Der Übergang von der ersten Schrägkontur 56 hin zu der Geradkontur 54 kann jedoch auch bspw. vollständig abgerundet erfolgen.

**Patentansprüche**

1.  Rastanordnung (40) für eine Getriebe-Schaltkupplung (32), mit einem ersten Glied (34) wie einer Führungsmuffe und einem zweiten Glied (36) wie einer Schaltmuffe, die in einer ersten Richtung (37, x) gegeneinander bewegbar sind, wobei an dem ersten Glied (34) ein Rastelement (42) wie eine Kugel gelagert ist, das elastisch mittels einer Feder (44) gegen das zweite Glied (36) angedrückt ist, wobei an dem zweiten Glied (36) eine Rastkontur (46) ausgebildet ist, die eine Vertiefung (60) aufweist, in die das Rastelement (42) in einer Raststellung der zwei Glieder (34, 36) eingreift, und wobei das zweite Glied (36) in der ersten Richtung (37, x) aus der Raststellung in eine zweite Stellung bewegbar ist, währenddessen das Rastelement (42) aus der Vertiefung (60) herausgedrückt wird, wobei
    **dadurch gekennzeichnet, dass**
    die Form der Rastkontur (46) und die Feder (44) für eine gegebene Relativgeschwindigkeit der zwei Glieder (34, 36) so ausgebildet sind, dass das Rastelement (42) bei der Relativbewegung nicht von der Rastkontur (46) abhebt, so dass ein Schaltklacken vermieden wird, wobei die Rastkontur (46) eine Sitzkontur (50), eine Geradkontur (54) und eine zwischen der Sitzkontur (50) und der Geradkontur (54) angeordnete Übergangskontur (52) aufweist, und wobei die Übergangskontur (52) eine erste Schrägkontur (56) aufweist, die benachbart zu der Sitzkontur (50) ist, und eine zweite Schrägkontur (58) aufweist, die benachbart zu der Geradkontur (54) ist, wobei der spitze Winkel ($\alpha_1$) im Bereich von 20° bis 70°, den die erste Schrägkontur (56) gegenüber der Geradkontur (54) einnimmt, größer ist als der spitze Winkel ($\alpha_2$), den die zweite Schrägkontur (58) gegenüber der Geradkontur (54) einnimmt,
    wobei ein Übergang zwischen der Sitzkontur (50) und der Übergangskontur (52) einen Radius ($r_v$) aufweist, der im Bereich von 0,3 mm bis 2 mm liegt.

2.  Rastanordnung nach Anspruch 1, **dadurch gekennzeichnet, dass** die maximale Steigung y'$_{max}$ der Rastkontur (46) die folgende Bedingung erfüllt,

    $$y'_{max} = \partial t \cdot (-g + (2F_0 - K \cdot \partial y) / 2 \cdot m) / v_{max,}$$

    wobei $\partial t$ die Schaltzeit ist, wobei g die Erdbeschleunigung ist, wobei $F_0$ die Vorspannkraft der Feder ist, wobei K die Federrate ist, wobei m die Masse des Rastelementes (42) ist und wobei $v_{max}$ die maximale Relativgeschwindigkeit der zwei Glieder (34, 36) ist.

3.  Rastanordnung nach einem der Ansprüche 1-2, **dadurch gekennzeichnet, dass** die Funktion der Rastkontur (46) stetig und differenzierbar ist.

4.  Rastanordnung nach einem der Ansprüche 1-3, **dadurch gekennzeichnet, dass** ein Übergang zwischen der Übergangskontur (52) und der Geradkontur (54) einen Radius ($r_v$) aufweist, der im Bereich von 0,3 mm bis 2 mm liegt.

5.  Rastanordnung nach einem der Ansprüche 1-4, **dadurch gekennzeichnet, dass** die zweite Schrägkontur (58) gegenüber der Geradkontur (54) einen Winkel ($\alpha_2$) im Bereich von 8° bis 30° aufweist.

6.  Rastanordnung nach einem der Ansprüche 1-5, **dadurch gekennzeichnet, dass** die erste und die zweite Schrägkontur (56, 58) in der ersten Richtung (37, x) etwa gleich lang sind.

7.  Rastanordnung nach einem der Ansprüche 1-6, **dadurch gekennzeichnet, dass** die Sitzkontur (50) eine an die Form des Rastelementes (42) angepasste Kontur aufweist.

8.  Verwendung einer Rastanordnung (40) nach einem der Ansprüche 1-7 für ein Doppelkupplungsgetriebe (14) für Kraftfahrzeuge.

9.  Rastanordnung (40) für eine Getriebe-Schaltkupplung (32), mit einem ersten Glied (34) wie einer Führungsmuffe und einem zweiten Glied (36) wie einer Schaltmuffe, die in einer ersten Richtung (37, x) gegeneinander bewegbar sind, wobei an dem ersten Glied (34) ein Rastelement (42) wie eine Kugel gelagert ist, das elastisch mittels einer Feder (44) gegen das zweite Glied (36) angedrückt ist, wobei an dem zweiten Glied (36) eine Rastkontur (46) ausgebildet ist, die eine Vertiefung (60) aufweist, in die das Rastelement (42) in einer Raststellung der zwei Glieder (34, 36) eingreift, und wobei das zweite Glied (36) in der ersten Richtung (37, x) aus der Raststellung in eine zweite Stellung bewegbar ist, währenddessen das Rastelement (42) aus der Vertiefung (60) herausgedrückt wird,
    **dadurch gekennzeichnet, dass**
    die Form der Rastkontur (46) und die Feder (44) für eine gegebene Relativgeschwindigkeit der zwei Glieder (34, 36) so ausgebildet sind, dass das Rastelement (42) bei der Relativbewegung nicht von der Rastkontur (46) abhebt, so dass ein Schaltklacken vermieden wird, wobei die Rastkontur (46) eine Sitzkontur (50), eine Geradkontur (54) und eine zwischen der Sitzkontur (50) und der Geradkontur (54) angeordnete Übergangskontur (52) aufweist, und wobei die Übergangskontur (52) eine erste Schrägkontur (56) aufweist, die benachbart zu der Sitzkontur (50) ist, und eine zweite Schrägkontur (58) aufweist, die benachbart zu der Geradkontur (54) ist, wobei der spitze Winkel ($\alpha_1$) im Bereich von 20° bis 70°, den die erste Schrägkontur (56) gegenüber der Geradkontur (54) einnimmt, größer ist als der spitze

Winkel ($\alpha_2$), den die zweite Schrägkontur (58) gegenüber der Geradkontur (54) einnimmt, wobei die erste und die zweite Schrägkontur (56, 58) in der ersten Richtung (37, x) etwa gleich lang sind.

**Claims**

1. Latching arrangement (40) for a transmission shift clutch (32) comprising a first member (34) such as a guide sleeve, and a second member (36) such as a shift sleeve, which are movable relative to each other in a first direction (37, x), wherein a latching element (42) such as a sphere is supported on the first member (34) and is pressed resiliently against the second member (36) by means of a spring (44), wherein a latching contour (46) is formed on the second member (36), which contour comprises a depression (60) in which the latching element (42) engages in a latching position of the two members (34, 36), and wherein the second member (36) is movable in the first direction (37, x) from the latching position into a second position, during which the latching element (42) is pressed out of the depression (60),
**characterized in that**
the shape of the latching contour (46) and the spring (44) are adapted for a given relative velocity of the two members (34, 36) such that the latching element (42) does not lift from the latching contour (46) during the relative movement, so that a shifting click noise is avoided, wherein the latching contour (46) comprises a seat contour (50), a linear contour (54) and a transition contour (52) arranged between the seat contour (50) and the linear contour (54), and wherein the transition contour (52) comprises a first oblique contour (56) which is adjacent to the seat contour (50), and comprises a second oblique contour (58) which is adjacent to the linear contour (54), wherein the acute angle ($\alpha_1$) in the range from 20° to 70° which the first oblique contour (56) assumes with respect to the linear contour (54) is larger than the acute angle ($\alpha_2$) which the second oblique contour (58) assumes relative to the linear contour (54), wherein a transition between the seat contour (50) and the transition contour (52) has a radius ($r_v$) which is in the range from 0,3 mm to 2 mm.

2. Latching arrangement according to claim 1, **characterized in that** the maximum inclination $y'_{max}$ of the latching contour (46) complies with the following condition,

$$y'_{max} = \partial t \cdot (-g + (2F_0 - K \cdot \partial y) / 2 \cdot m) / v_{max},$$

where $\partial t$ is the shift time, where g is the gravity acceleration, where $F_0$ is the bias force of the spring, wherein K is the spring rate, wherein m is the mass of the latching element (42) and wherein $v_{max}$ is the maximum relative velocity of the two members (34, 36).

3. Latching arrangement according to one of the claims 1-2, **characterized in that** the function of the latching contour (46) is continuous and differentia-ble.

4. Latching arrangement according to one of claims 1-3, **characterized in that** a transition between the transition contour (52) and the linear contour (54) comprises a radius ($r_v$) which is in the range from 0,3 mm to 2 mm.

5. Latching arrangement according to one of claims 1-4, **characterized in that** the second oblique contour (58) comprises an angle ($\alpha_2$) in the range from 8° to 30° relative to the linear contour (54).

6. Latching arrangement according to one of claims 1-5, **characterized in that** the first and second oblique contours (56, 58) have approximately the same length in the first direction (37, x).

7. Latching arrangement according to one of claims 1-6, **characterized in that** the seat contour (50) comprises a contour adapted to the shape of the latching element (42).

8. Use of a latching arrangement (40) according to one of claims 1-7 for a double clutch transmission (14) for motor vehicles.

9. Latching arrangement (40) for a transmission shift clutch (32), with a first member (34) such as a guide sleeve and a second member (36) such as a shift sleeve, which are movable relative to one another in a first direction (37, x), wherein a latching element (42) such as a sphere is mounted on the first member (34) and is pressed resiliently against the second member (36) by means of a spring (44), wherein a latching contour (46) is formed on the second member (36), which contour has a depression (60) into which the latching element (42) engages in a latching position of the two members (34, 36), and wherein the second member (36) is movable in the first direction (37, x) from the latching position into a second position, during which the latching element (42) is pressed out of the depression (60),
**characterized in that**
the shape of the latching contour (46) and the spring (44) are adapted for a given relative velocity of the two members (34, 36) such that the latching element (42) does not lift from the latching contour (46) during the relative movement, so that s shifting click noise is avoided, wherein the latching contour (46) comprises a seat contour (50), a linear contour (54) and a transition contour (52) arranged between the seat contour (50) and the linear contour (54), and wherein the transition contour (52) comprises a first oblique contour (56), which is adjacent to the seat contour (50), and a second oblique contour (58) which is adjacent to the linear contour (54), wherein the acute angle ($\alpha_1$) in the range from 20° to 70° which the first oblique contour (56) assumes with respect to the linear contour (54), is larger than the acute angle ($\alpha_2$) which the second inclined contour (58) assumes relative to the linear contour (54), wherein the first and second inclined contours (56, 58) have approximately the same length in the first direction (37, x)

**Revendications**

1. Agencement d'encliquetage (40) pour un embrayage de boîte de vitesses (32), comprenant un premier organe (34) tel qu'un manchon de guidage et un deuxième organe (36) tel qu'un manchon de commande, qui peuvent être déplacés l'un par rapport à l'autre dans une première direction (37, x), un élément d'encliquetage (42) tel qu'une bille étant monté sur le premier organe (34), lequel élément d'encliquetage est pressé élastiquement contre le deuxième organe (36) au moyen d'un ressort (44), un contour d'encliquetage (46) étant réalisé sur le deuxième organe (36), lequel contour d'encliquetage présente un renfoncement (60) dans lequel s'engage l'élément d'encliquetage (42) dans une position d'encliquetage des deux organes (34, 36), et le deuxième organe (36) pouvant être déplacé dans la première direction (37, x) hors de la position d'encliquetage dans une deuxième position, tandis que l'élément d'encliquetage (42) est repoussé hors du renfoncement (60),
**caractérisé en ce que**
la forme du contour d'encliquetage (46) et le ressort (44) sont réalisés pour une vitesse relative donnée des deux organes (34, 36) de telle sorte que l'élément d'encliquetage (42), lors du mouvement relatif, ne se soulève pas du contour d'encliquetage (46), de sorte qu'un claquement de commutation est évité, le contour d'encliquetage (46) présentant un contour de siège (50), un contour droit (54) et un contour de transition (52) disposé entre le contour de siège (50) et le contour droit (54), et le contour de transition (52) présentant un premier contour oblique (56), qui est adjacent au contour de siège (50), et un deuxième contour oblique (58) qui est adjacent au contour droit (54), l'angle aigu ($\alpha_1$) dans une plage de 20° à 70°, formé par le premier contour oblique (56) avec le contour droit (54), étant supérieur à l'angle aigu ($\alpha_2$) formé par le deuxième contour oblique (58) avec le contour droit (54), une transition entre le contour de siège (50) et le contour de transition (52) présentant un rayon ($r_v$) qui est situé dans une plage de 0,3 mm à 2 mm.

2. Agencement d'encliquetage selon la revendication 1, **caractérisé en ce que** la pente maximale $y'_{max}$ du contour d'encliquetage (46) satisfait à la relation ci-dessous :

$$y'_{max}= \partial t \cdot (-g+(2F_0 - K \cdot \partial y)/2 \cdot m)/V_{max},$$

$\partial t$ étant le temps de commutation, g étant l'accélération terrestre, $F_0$ étant la force de précontrainte du ressort, K étant la constante de ressort, m étant la masse de l'élément d'encliquetage (42) et $V_{max}$ étant la vitesse relative maximale des deux organes (34, 36).

3. Agencement d'encliquetage selon l'une quelconque des revendications 1 et 2, **caractérisé en ce que** la fonction du contour d'encliquetage (46) est constante et différentiable.

4. Agencement d'encliquetage selon l'une quelconque des revendications 1 à 3, **caractérisé en ce qu'**une transition entre le contour de transition (52) et le contour droit (54) présente un rayon ($r_v$) qui est situé dans une plage de 0,3 mm à 2 mm.

5. Agencement d'encliquetage selon l'une quelconque des revendications 1 à 4, **caractérisé en ce que** le deuxième contour oblique (58) présente, par rapport au contour droit (54), un angle ($\alpha_2$) de l'ordre de 8° à 30°.

6. Agencement d'encliquetage selon l'une quelconque des revendications 1 à 5, **caractérisé en ce que** le premier et le deuxième contour oblique (56, 58) ont approximativement la même longueur dans la première direction (37, x).

7. Agencement d'encliquetage selon l'une quelconque des revendications 1 à 6, **caractérisé en ce que** le contour de siège (50) présente un contour adapté à la forme de l'élément d'encliquetage (42).

8. Utilisation d'un agencement d'encliquetage (40) selon l'une quelconque des revendications 1 à 7, pour une transmission à double embrayage (14) pour véhicules automobiles.

9. Agencement d'encliquetage (40) pour un embrayage de boîte de vitesses (32), comprenant un premier organe (34) tel qu'un manchon de guidage et un deuxième organe (36) tel qu'un manchon de commande, qui peuvent être déplacés l'un par rapport à l'autre dans une première direction (37, x), un élément d'encliquetage (42) tel qu'une bille étant monté sur le premier organe (34), lequel élément d'encliquetage est pressé élastiquement contre le deuxième organe (36) au moyen d'un ressort (44), un contour d'encliquetage (46) étant réalisé sur le deuxième organe (36), lequel contour d'encliquetage présente un renfoncement (60) dans lequel s'engage l'élément d'encliquetage (42) dans une position d'encliquetage des deux organes (34, 36), et le deuxième organe (36) pouvant être déplacé dans la première direction (37, x) hors de la position d'encliquetage dans une deuxième position, tandis que l'élément d'encliquetage (42) est repoussé hors du renfoncement (60),

**caractérisé en ce que**

la forme du contour d'encliquetage (46) et le ressort (44) sont réalisés pour une vitesse relative donnée des deux organes (34, 36) de telle sorte que l'élément d'encliquetage (42), lors du mouvement relatif, ne se soulève pas du contour d'encliquetage (46), de sorte qu'un claquement de commutation est évité, le contour d'encliquetage (46) présentant un contour de siège (50), un contour droit (54) et un contour de transition (52) disposé entre le contour de siège (50) et le contour droit (54), et le contour de transition (52) présentant un premier contour oblique (56), qui est adjacent au contour de siège (50), et un deuxième contour oblique (58) qui est adjacent au contour droit (54), l'angle aigu ($\alpha_1$) dans une plage de 20° à 70°, formé par le premier contour oblique (56) avec le contour droit (54), étant supérieur à l'angle aigu ($\alpha_2$) formé par le deuxième contour oblique (58) avec le contour droit (54), le premier et le deuxième contour oblique (56, 58) ayant approximativement la même longueur dans la première direction (37, x).

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005028803 A1